# EUROPÄISCHE PATENTANMELDUNG

(11) **EP 3 973 838 A1**
(43) Veröffentlichungstag der Anmeldung: **30.03.2022**
(21) Anmeldenummer: 20197753.5
(22) Anmeldetag: 23.09.2020
(51) Int. Cl.: A47L 9/10, A47L 9/12, A47L 9/20

(54) **FILTEREINRICHTUNG UND VERFAHREN ZU DEREN ABREINIGUNG**

(71) Anmelder: Hilti Aktiengesellschaft, 9494 Schaan (LI)
(72) Erfinder: Ohlendorf, Oliver, 86899 Landsberg (DE)
(74) Vertreter: Hilti Aktiengesellschaft Corporate Intellectual Property

(57) **Zusammenfassung**

Filtereinrichtung (2) für einen Staubsauger (1) mit einer Turbineneinrichtung (3) und einem Motor (22) zur Erzeugung von einem ersten Hauptluftstrom (4a) und/oder einem zweiten Hauptluftstrom (4b) durch einen Sammelbehälter (5) des Staubsaugers, wobei der Staubsauger zwei Kammern (6a, 6b) umfasst, und Filterelemente (7a, 7b) der Filtereinrichtung durch eine schlagartige Positionsänderung eines Teilungselements (11a, 11b) in den Kammern abgereinigt werden. Dadurch, dass bei Abreinigung einer der beiden Kammern der Saugbetrieb des Staubsaugers durch die andere Kammer aufrechterhalten werden kann, kann die Filterabreinigung während eines fortgesetzten Saugbetrieb des Staubsaugers erfolgen.

Verfahren zum Abreinigen einer Filtereinrichtung in einem Staubsauger, wobei durch Betätigung eines Ventils ein Luftvolumen aus einer der beiden Kammern verdrängt wird. Durch diese Druckänderung wird eine Positionsänderung des Teilungselements bewirkt, die zu einem Rückspül-Impuls und einer mechanischen Erschütterung des Filterelements, sowie zu einer Abreinigung der Filtereinrichtung führt.

## Beschreibung

Die Erfindung betrifft eine Filtereinrichtung für einen Staubsauger mit einer Turbineneinrichtung und einem Motor zur Erzeugung von einem ersten und/oder einem zweiten Hauptluftstrom durch einen Sammelbehälter des Staubsaugers, wobei der Staubsauger zwei Kammern umfasst und Filterelemente der vorgeschlagenen Filtereinrichtung durch eine schlagartige Positionsänderung eines Teilungselements in den Kammern abgereinigt werden. Dadurch, dass bei Abreinigung einer der beiden Kammern der Saugbetrieb des Staubsaugers durch die andere Kammer aufrechterhalten werden kann, kann die Filterabreinigung vorteilhafterweise während eines fortgesetzten Saugbetrieb des Staubsaugers erfolgen. In einem zweiten Aspekt betrifft die Erfindung ein Verfahren zum Abreinigen einer Filtereinrichtung in einem Staubsauger, wobei durch Betätigung eines Ventils ein Unterdruck aus einer der beiden Kammern verdrängt und durch einen atmosphärischen Druck ersetzt wird. Durch diese Druckänderung kann vorteilhafterweise eine Positionsänderung des Teilungselements bewirkt werden, die zu einer Erschütterung des Filterelements und zu einer Abreinigung der Filtereinrichtung führt.

### Hintergrund der Erfindung:

Auf Baustellen werden oftmals Staubsauger verwendet, um Schmutzpartikel in Form von Staub, Bohrmehl oder dergleichen auf- oder einzusaugen. Zum Aufsammeln des Schmutzes wird mittels einer Turbine ein Unterdruck im Inneren des Staubsaugers erzeugt. Über einen Schlauch, der mit dem Staubsauger verbunden ist, wird der Unterdruck genutzt, um Schmutzpartikel aufzusaugen und in einen Auffangbehälter des Staubsaugers zu transportieren. Handelsübliche Staubsauger sind gewöhnlich so aufgebaut, dass die Turbine, ein Filter, der Auffangbehälter sowie die Eintrittsöffnung für die angesaugten Schmutzpartikel hintereinander bzw. auf einem Strömungspfad liegen. Üblicherweise ist zwischen dem Auffangbehälter bzw. der Eintrittsöffnung für die angesaugten Schmutzpartikel und der unterdruckerzeugenden Turbine der Filter positioniert. Da die angesaugte, mit Schmutzpartikeln angereicherte Luft durch die Turbine strömen würde und folglich die Turbine verschmutzen bzw. beschädigen würde, dient der Filter zur Reinigung der angesaugten Luft und damit insbesondere zum Schutz der Turbine.

Ein Problem kann jedoch entstehen, wenn der Filter keine ausreichende Filterfunktion mehr leisten kann und angesaugte Schmutzpartikel nicht mehr aus der durch den Filter strömenden Luft herausgefiltert werden können. Dies ist insbesondere der Fall, wenn aufgrund eines länger andauernden Einsatzes des Staubsaugers der Filter zunehmend verschmutzt, d.h. mit Schmutzpartikeln angefüllt ist. Um den Filter funktionsfähig zu halten, muss dieser zwischenzeitlich gereinigt und von den aufgenommenen Schmutzpartikeln befreit werden. Zur Reinigung des Filters muss jedoch bei handelsüblichen Staubsaugern der Betrieb desselben abgeschaltet bzw. unterbrochen werden, so dass der Sauger geöffnet und der Filter zur Entfernung der aufgenommenen Schmutzpartikel entnommen werden kann. Derartige Aktivitäten unterbrechen jedoch den Staubsaugvorgang und sind sehr zeitraubend.

Gemäß dem Stand der Technik existieren auch bereits Staubsauger, die eine Vorrichtung zur Abreinigung des Filters aufweisen, ohne dass der Staubsauger hierzu abgeschaltet, geöffnet und der Filter zur Entfernung der aufgenommenen Schmutzpartikel entnommen werden muss. Nachteilig an derartigen Vorrichtungen ist jedoch, dass auch bei diesen Staubsaugern der Saugbetrieb des Staubsaugers während der Abreinigung des Filters unterbrochen werden muss. Alternativ kann der Saugbetrieb mit reduzierter Leistung fortgesetzt werden. In den meisten Fällen sinkt durch die Saugunterbrechung die Absaugleistung des Staubsaugers und Staubpartikel entweichen unerwünschterweise in die Atmosphäre, wo sie die Staubkonzentration erhöhen. Häufig sind bekannten Filterabreinigungsvorrichtungen komplex aufgebaut und aus vielen Komponenten zusammengesetzt. Dadurch sind konventionelle Filterabreinigungsvorrichtungen, wie sie aus dem Stand der Technik bekannt sind, häufig fehler-, verschleiß- oder wartungsanfällig.

Aufgabe der vorliegenden Erfindung ist es daher, die vorstehend beschriebenen Mängel und Nachteile des Standes der Technik zu überwinden und eine verbesserte Filtereinrichtung für einen Staubsauger bereitzustellen, mit der ein Saugbetrieb des Staubsaugers während der Abreinigung des Filters nicht unterbrochen werden muss.

Die Aufgabe wird gelöst durch den Gegenstand der unabhängigen Ansprüche. Vorteilhafte Ausführungsformen des erfindungsgemäßen Gegenstands werden in den abhängigen Ansprüchen beschrieben.

### Beschreibung der Erfindung:

Die Aufgabe wird dabei in einem ersten Aspekt durch eine Filtereinrichtung für einen Staubsauger gelöst, wobei der Staubsauger eine Turbineneinrichtung und einen Motor zum Erzeugen von einem ersten und/oder einem zweiten Hauptluftstrom durch einen Sammelbehälter des Staubsaugers umfasst. Die Filtereinrichtung ist durch die folgenden Merkmale und Komponenten gekennzeichnet:
eine erste Kammer und eine zweite Kammer mit je einem Filterelement, einer Einströmöffnung und einer Turbinenöffnung, wobei ein Ventil dazu eingerichtet ist, entweder die Einströmöffnung oder die Turbinenöffnung zu verschließen, wobei in der Kammer ein Unterdruck vorliegt, wenn die Einströmöffnung verschlossen ist und wobei in der Kammer ein atmosphärischer Druck vorliegt, wenn die Einströmöffnung geöffnet ist,
wobei die Kammern ferner je ein Teilungselement umfassen,
wobei die Teilungselemente in einer Parkposition und in einer Abreinigungsposition vorliegen können,
wobei ein Umschalten zwischen der Parkposition und der Abreinigungsposition durch ein Einlassen des atmosphärischen Drucks erfolgt, das durch eine Betätigung des Ventils bewirkt wird,
wobei die Teilungselemente dazu eingerichtet sind, beim Einnehmen der Abreinigungsposition einen Impuls auf das jeweilige Filterelement auszuüben, so dass eine Abreinigung des Filterelements bewirkt wird.

Tests haben gezeigt, dass die vorgeschlagene Filtereinrichtung für eine hohe und unterbrechungsfreie Absaugleistung sorgt. Durch das vorteilhafte Zusammenwirken und die konkrete Ausgestaltung der Ventile und der Teilungselemente, sowie die dadurch gesteuerte Druckverteilung in den unterschiedlichen Bereichen des Staubsaugers kann eine abwechselnde Abreinigung der zwei Kammern bei gleichzeitig fortgeführtem Saugbetrieb der jeweils anderen Kammer ermöglicht werden. Dadurch wird vorteilhafterweise eine hocheffiziente und bauraumoptimierte Möglichkeit zur Filterabreinigung in einem Staubsauger bereitgestellt. Die vorgeschlagene Filtereinrichtung ist insbesondere vergleichsweise einfach aufgebaut. Anwendungstests haben gezeigt, dass die vorgeschlagene Filtereinrichtung besonders robust und wenig anfällig für Reparaturen und Verschleiß ist. Zu diesen Vorteilen der Erfindung tragen insbesondere die in den Kammern vorgesehenen Teilungselemente bei, die gemäß einer bevorzugten Ausgestaltung der Erfindung eine Membranplatte, sowie ein integriertes Elastomerventil umfassen. Es ist in dieser Ausgestaltung der Erfindung bevorzugt, dass die Membranplatte dazu eingerichtet ist, beim Einnehmen der Abreinigungsposition einen Abreinigungs-Impuls auf das jeweilige Filterelement auszuüben. Dieser Abreinigungs-Impuls kann im Sinne der Erfindung auch als Rückspül-Impuls bezeichnet werden. Zusätzlich zu dem Rückspül-Impuls wird durch die Öffnung des Ventils eine mechanische Erschütterung des Filterelements bewirkt. Durch die Erschütterung werden Staubpartikel und Filterkuchen von dem Filterelement gelöst und können in den Sammelbehälter des Staubsaugers fallen. Die Erschütterung des Filterelements stellt vorzugsweise eine Rückspülung der Filtereinrichtung dar, die im Kontext der vorliegenden Erfindung eingesetzt wird, um die Filter des Staubsaugers abzureinigen.

Es ist im Sinne der Erfindung bevorzugt, dass die Teilungselemente innerhalb der Kammern beweglich ausgebildet sind. Die Vorsehung einer ersten und einer zweiten Kammer im Kontext der vorgeschlagenen Filtereinrichtung ist so zu verstehen, dass die Filtereinrichtung vorzugsweise mindestens zwei Kammern aufweist. Es kann im Sinne der Erfindung auch bevorzugt sein, dass die Filtereinrichtung mehr als zwei Kammern aufweist, zum Beispiel drei oder vier Kammern.

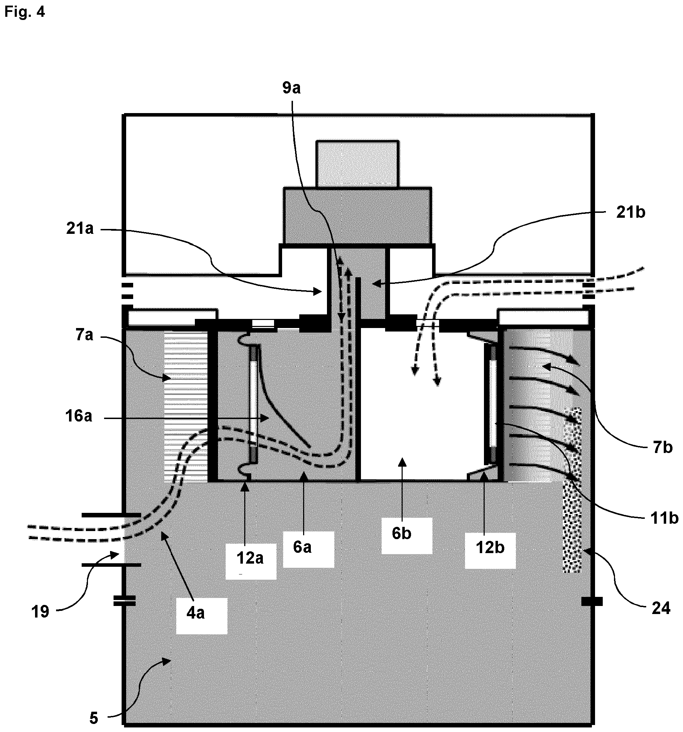

Die Beweglichkeit der Teilungselemente bedeutet im Sinne der Erfindung bevorzugt, dass die Teilungselemente in zwei verschiedenen Positionen innerhalb der jeweiligen Kammer vorliegen können, und zwar in einer Parkposition oder in einer Abreinigungs-position. Ein Teilungselement umfasst vorzugsweise eine Membranplatte, ein Elastomerventil und zwei Sicken, die vorzugsweise als Elastomersicken ausgebildet sind. Diese Sicken sind vorzugsweise dazu eingerichtet, in zwei Zuständen vorzuliegen, wobei ein erster Zustand der Sicken mit der Parkposition des Teilungselements bzw. der Membranplatte korrespondiert, während ein zweiter Zustand der Sicken mit der Abreinigungsposition des Teilungselements bzw. der Membranplatte korrespondiert. Die zwei verschiedenen Zustände, in denen die Sicken der Teilungselemente vorliegen können, werden beispielsweise in Fig. 4 verdeutlicht, in der die Sicken der Kammern in unterschiedlichen Zuständen vorliegen. In der ersten Kammer des Staubsaugers, die auf der linken Figurenhälfte dargestellt wird, befindet sich das Teilungselement und damit die Membranplatte und die Sicke in der Saugbetriebsstellung, die im Sinne der Erfindung auch als Parkposition bezeichnet wird. In der zweiten Kammer des Staubsaugers, die auf der rechten Hälfte der Fig. 4 dargestellt wird, befindet sich das Teilungselement und damit die Membranplatte und die Sicke in der Abreinigungsstellung.

Die Membranplatten der Teilungselemente können vorzugsweise unter Verwendung der Sicken an den Innenwänden der Kammern befestigt vorliegen. Gemäß einer bevorzugten Ausgestaltung der Erfindung können die Membranplatten im Wesentlichen vertikal innerhalb der Kammern ausgerichtet sein, so dass sie im Wesentlichen parallel zu den Filterelementen und einer Trennwand zwischen den Kammern ausgerichtet vorliegen. In dieser Ausgestaltung der Erfindung ist es bevorzugt, dass die Membranplatten mit den Sicken an der inneren Oberseite und an der inneren Unterseite der ersten oder der zweiten Kammer befestigt vorliegen.

In der Parkposition sind die Teilungselemente dazu eingerichtet sind, die Kammern des Staubsaugers in einen vorderen Raum und einen hinteren Raum aufzuteilen. Die vordere Kammer ist vorzugsweise in räumlicher Nähe zu dem Filterelement der jeweiligen Kammer angeordnet, während der hintere Raum der Kammer bevorzugt von einer Trennwand zwischen der ersten und der zweiten Kammer begrenzt wird, sowie von einer weiteren Seitenwand, die eine Einströmöffnung und eine Turbinenöffnung aufweist. Es ist im Sinne der Erfindung bevorzugt, dass die weitere Seitenwand die Kammer bzw. ihren hinteren Raum von einem Belüftungskanal abgrenzt. Es ist im Sinne der Erfindung bevorzugt, dass der vordere Raum einer Kammer zwischen dem Filterelement und dem Teilungselement gebildet wird und der hintere Raum die Ausströmungsöffnung und eine Turbinenöffnung umfasst. Die Einströmöffnung und die Turbinenöffnung des hinteren Raumes der ersten oder der zweiten Kammer können von einem Ventil verschlossen oder freigegeben werden, wobei je eine der beiden Öffnungen geschlossen vorliegt, während die andere Öffnung geöffnet ist. Mit anderen Worten ist es im Sinne der Erfindung bevorzugt, dass jeder der beiden Kammern ein Ventil umfasst, wobei die Ventile dazu eingerichtet sind, entweder die Einströmöffnung oder die Turbinenöffnung einer Kammer zu verschließen und eine Strömung durch die jeweils andere Öffnung zu ermöglichen. Vorzugsweise führt das Öffnen der Einströmöffnung zu einem Verschließen der Turbinenöffnung, und umgekehrt.

Es ist im Sinne der Erfindung bevorzugt, dass beiden Kammern des Staubsaugers je ein Ventil aufweisen. Vorzugsweise kann eine Verbindung zwischen den Ventilen der einzelnen Kammern bestehen, damit eine Betätigung des einen Ventils zu einer Betätigung des anderen Ventils führt. Es kann allerdings auch bevorzugt sein, dass die Ventile als ein Bauteil ausgeführt sind. Es ist im Sinne der Erfindung bevorzugt, dass die Ventile dazu eingerichtet sind, Öffnungen zur atmosphärischen Luftseite bzw. zur Umgebung des Staubsaugers zu verschließen oder freizugeben. Die Ventile können beispielsweise als Schieberventile ausgebildet sein, die zwischen einer geöffneten Stellung und einer geschlossenen Stellung hin- und herbewegt bzw. -geschoben werden können. Die Ventile stellen insbesondere steuerbare Öffnungen dar, d.h. Öffnungen, die vorzugsweise automatisch geöffnet oder verschlossen werden können. Es ist im Sinne der Erfindung insbesondere bevorzugt, dass das Öffnen und Schließen der Ventile gesteuert werden kann. Die Ventile stellen insbesondere Regelelemente dar, mit denen der Druck bzw. die Druckverhältnisse im Staubsauger geregelt werden kann. Insbesondere kann mit den Ventilen ein Öffnungsquerschnitt der Turbinen- oder Einströmöffnung eingestellt werden.

Es ist im Sinne der Erfindung bevorzugt, dass die Turbinenöffnung dazu eingerichtet ist, eine Strömungsverbindung zwischen einer der Kammern und der Turbine zu ermöglichen, wobei diese Strömungsverbindung zwischen den Kammern und der Turbineneinrichtung insbesondere bei Betrieb des Staubsaugers besteht. Vorzugsweise wird die Strömungsverbindung von einem Strömungskanalabschnitt gebildet, der zwischen der Turbinenöffnung einer der Kammern und der Turbine gebildet wird. Dieser Strömungskanalabschnitt ist insbesondere bei Betrieb des Staubsaugers geöffnet, damit der von der Turbine erzeugte Unterdruck zum Ein- bzw. Aufsaugen von Staub verwendet werden kann. Die Stellung des Ventils, bei der ein Saugbetrieb durch die jeweilige Kammer ermöglicht wird, wird im Sinne der Erfindung bevorzugt als "erste Stellung" oder "Saugbetriebsstellung" des Ventils bezeichnet. In dieser ersten Stellung des Ventils ist die Turbinenöffnung einer Kammer geöffnet, während die Einströmöffnung zum Belüftungskanal geschlossen ist. In der zweiten Stellung des Ventils, die im Sinne der Erfindung auch als Abreinigungsstellung bezeichnet wird, ist die Turbinenöffnung geschlossen, während die Einströmöffnung geöffnet ist.

Es ist im Sinne der Erfindung bevorzugt, dass in der entsprechenden Kammer ein Unterdruck vorliegt, wenn die zugehörige Einströmöffnung verschlossen und die Turbinenöffnung geöffnet ist, d.h. das Ventil der entsprechenden Kammer in der Saugbetriebsstellung vorliegt. In diesem Fall erfolgt durch die entsprechende Kammer ein Absaugbetrieb und Staubpartikel können mit dem zugehörigen Hauptluftstrom in den Sammelbehälter eingesaugt werden. Es ist im Sinne der Erfindung ferner bevorzugt, dass während des Saugbetriebs durch die eine Kammer das Filterelement in der anderen Kammer abgereinigt werden kann. Um die Abreinigung des Filterelements zu bewirken, kann das Ventil der anderen Kammer betätigt werden, so dass eine Einströmöffnung geöffnet und die Turbinenöffnung verschlossen ist. Dadurch gelangt ein atmosphärischer Druck in diese abzureinigende Kammer.

Erfindungsgemäß ist vorgesehen, dass jede Kammer ein Teilungselement umfasst, das in einer Parkposition und in einer Abreinigungsposition vorliegen kann. Ein Umschalten zwischen der Parkposition und der Abreinigungsposition kann vorteilhafterweise durch ein Einlassen des atmosphärischen Drucks erfolgen, wobei das Einlassen durch eine Betätigung des Ventils bewirkt wird. Die Betätigung des Ventils bedeutet im Sinne der Erfindung bevorzugt, dass das Ventil von der ersten in die zweite Stellung verschoben wird, oder umgekehrt. Mit anderen Worten wird bei einer Betätigung des Ventils das Ventil von der Saugbetriebsstellung in die Filterabreinigungsstellung gebracht, oder umgekehrt. Die Teilungselemente sind dazu eingerichtet, beim Einnehmen der Abreinigungsposition einen Impuls auf das jeweilige Filterelement auszuüben, so dass eine Abreinigung des Filterelements bewirkt wird. Insbesondere wird ein Abreinigungsstoß oder Abreinigungsimpuls von dem Teilungselement auf das Filterelement ausgeübt. Die Teilungselemente können über Membranplatten und Elastomerventile verfügen, wobei die Elastomerventile während des Saugbetriebs (Einströmöffnung geschlossen, Turbinenöffnung geöffnet) in einer geöffneten Position vorliegen. Mit anderen Worten können die Teilungselemente neben den Membranplatten Elastomerventile aufweisen, wobei die Elastomerventile an den Membranplatte anliegen und eine Luftströmung durch die Membranplatte durch das Anliegen verhindern können ("geschlossener Zustand") oder wobei die Elastomerventile einen Spalt zwischen Elastomerventil und Membranplatte bilden können, durch den eine Luftströmung strömen kann ("geöffneter Zustand"). Vorzugsweise wird ein Spalt zwischen dem Elastomerventil und Membranplatte vorzugsweise dadurch gebildet, dass das Elastomerventil an einer Seite an der Membranplatte befestigt vorliegt und an der anderen Seite der Membranplatte in einem Abstand zu der Membranplatt vorliegen kann. Es ist im Sinne der Erfindung bevorzugt, dass das Elastomerventil an mindestens einer Seite an der Membranplatte befestigt vorliegt. Mit anderen Worten kann das Elastomerventil an mehr als einer Seite an der Membranplatte befestigt vorliegen. In der geöffneten Position lassen die Elastomerventile die Hauptluftströme, die sich im Saugbetrieb zwischen Staubsammelbehälter und Turbine ausbilden, durch eine Öffnung zwischen Elastomerventil und Membranplatte des Teilungselements durch. Wenn nun das Ventil von der Saugbetriebsstellung in die Filterabreinigungsstellung gebracht wird, wird der Unterdruck in der abzureinigenden Kammer geschwächt, wobei der Saugbetrieb der Staubsaugvorrichtung durch die andere Kammer vorteilhafterweise aufrechterhalten werden kann. Die Schwächung des Unterdrucks kann im Sinne der Erfindung dadurch bewirkt werden, dass ein Druckausgleichsstrom aus der Umgebung des Staubsaugers in die abzureinigende Kammer geleitet wird. Dies erfolgt vorzugsweise durch den Belüftungskanal und die Einströmöffnung der entsprechenden Kammern. Das Einlassen des Druckausgleichsstroms kann auch dazu führen, dass in der abzureinigenden Kammer kein Unterdruck mehr vorliegt.

Es ist im Sinne der Erfindung bevorzugt, dass durch das Betätigen des Ventils die Einströmöffnung zwischen Kammer und Belüftungskanal geöffnet wird, so dass aufgrund des im Saugbetrieb bestehenden Unterdrucks in der Kammer ein Luftstrom ("Druckausgleichsstrom") in die Kammer hinein entsteht, durch den das Elastomerventil an die Membranplatte gedrückt wird. Dadurch wird das Elastomerventil geschlossen und der Hauptluftstrom, der sich im Saugbetrieb zwischen Staubsammelbehälter und Turbine ausbildet, wird von dem Elastomerventil nicht mehr durchgelassen. Mit anderen Worten blockiert in diesem Fall, dass die Turbinenöffnung geschlossen und die Einströmöffnung geöffnet ("Filterabreinigungsstellung") vorliegt, das Teilungselement einen der beiden Hauptluftströme. Durch den ruckartig durch die geöffnete Einströmöffnung eindringenden Luftstoß wird nicht nur das Elastomerventil an die Membranplatte gedrückt und dadurch verschlossen, sondern auch das Teilungselement mit großer Wucht bzw. hoher Beschleunigung in Richtung des Filterelements der entsprechenden Kammer beschleunigt. Diese ruckartige Bewegung des Teilungselements wird im Kontext der vorliegenden Erfindung als "Einnehmen der Abreinigungsposition" bezeichnet, wodurch das Teilungselement einen Rückspül-Impuls auf das jeweilige Filterelement ausübt. Durch diesen Impuls kann es vorzugsweise zusätzlich zu einer mechanischen Erschütterung des Filterelements kommen, so dass vorteilhafterweise eine mechanische Abreinigung des Filterelements bewirkt wird. Vorzugsweise kann der Impuls durch einen Kontakt zwischen Teilungs- und Filterelement oder aber auch kontaktlos durch eine Komprimierung der Luft zwischen den Elementen übertragen werden.

Es ist im Sinne der Erfindung bevorzugt, dass zwischen dem Teilungselement und dem Filterelement ein mechanischer Anschlag vorgesehen ist. Dieser Anschlag kann beispielsweise als Gitter oder als Gitterelement ausgebildet sein. Vorzugsweise ist der mechanische Anschlag dazu eingerichtet, einen Stoß-Impuls bzw. den Rückspül-Impuls auf das Filterelement zu übertragen.

Es ist im Sinne der Erfindung bevorzugt, dass die Belüftungskanäle zwischen dem Sammelbehälter und dem Saugerkopf angeordnet vorliegen. Der Sammelbehälter bildet den unteren Bereich des Staubsaugers, in dem der von dem Staubsauger eingesaugte Staub aufgefangen und bis zu einer Leerung des Staubsaugers aufbewahrt wird. Es ist im Sinne der Erfindung bevorzugt, dass die erste und die zweite Kammer Bestandteil des Sammelbehälters sind. Mit anderen Worten liegen die erste Kammer und die zweite Kammer in dem Sammelbehälter des Staubsaugers angeordnet vor. In einer bevorzugten Ausgestaltung der Erfindung weisen die Kammern Einlassöffnungen auf, die gegenüber dem Sammelbehälter mit Filterelementen abgegrenzt sind. Vorzugsweise sind die Filterelemente dazu eingerichtet, die Einlassöffnungen so zu verschließen, dass Staubpartikel aus den Hauptluftströmen herausgefiltert werden können, wobei sich die Hauptluftströme im Saugbetrieb zwischen dem Saugschlaucheinlass des Staubsammelbehälters und der Turbine ausbilden. Es sind diese Filterelemente zwischen den Kammern und dem restlichen Volumen des Sammelbehälters, die im Kontext der vorliegenden Erfindung abgereinigt werden sollen. Durch die direkte und unmittelbare Verbindung zwischen den Filterelementen und dem Sammelbehälter können Staubpartikel und Filterkuchen, die bei der Abreinigung von den Filterelementen gelöst werden, direkt in den Sammelbehälter gelangen und bei der nächsten Leerung des Behälters entsorgt werden.

Der Saugerkopf bildet vorzugsweise den oberen Bereich des Staubsaugers; er wird vorzugsweise auch als "Staubsauger-Kopf" bezeichnet. Der Saugerkopf umfasst vorzugsweise die Turbineneinrichtung des Staubsaugers, sowie einen Motor. Es ist im Sinne der Erfindung bevorzugt, dass die Turbine Bestandteil einer Absaugeinrichtung innerhalb des Staubsaugers ist. Der Motor dient zum Antrieb der Turbine bzw. um den Betrieb des Staubsaugers zu ermöglichen. Zwischen dem Saugerkopf und dem Sammelbehälter liegen Belüftungskanäle angeordnet vor, die nach außen, d.h. gegenüber der Umgebung des Staubsaugers, von Teilbereichen des Saugergehäuses begrenzt werden können. Diese Teilbereiche des Saugergehäuses weisen vorzugsweise Lüftungsöffnungen oder Lüftungsschlitze auf, durch die Luft in das Innere des Staubsaugers eingesaugt werden kann. Es ist im Sinne der Erfindung insbesondere bevorzugt, dass die Luft in die Belüftungskanäle eingesaugt wird, wobei die Luft von dort in die Kammern der vorgeschlagenen Filtereinrichtung gelangen kann. Der Luftstrom von dem Belüftungskanal in die abzureinigende Kammer bildet in einer besonders bevorzugten Ausgestaltung der Erfindung einen Druckausgleichsstrom, der durch das geöffnete Ventil und durch die Einströmöffnung von dem Belüftungskanal in die Kammer gelangen kann. Mit anderem Worten kann bei Öffnen des ersten oder zweiten Ventils ein Druckausgleichsstrom in die erste Kammer oder in die zweite Kammer des Staubsaugers gelangen. Es ist im Sinne der Erfindung bevorzugt, dass die Ventile mit je einem Stellelement verschoben, d.h. geöffnet oder geschlossen, werden können. Die Stellelemente können beispielsweise in den Belüftungskanälen vorliegen, vorzugsweise in räumlicher Nähe zu der weiteren Seitenwand, die vorzugsweise eine Trennwand zwischen dem Belüftungskanal und der ersten oder der zweiten Kammer des Staubsaugers bildet.

Es ist im Sinne der Erfindung bevorzugt, dass bei Betrieb des Staubsaugers in dem Sammelbehälter und in mindestens einer der beiden Kammern ein Unterdruck herrscht. Vorzugsweise kann der Unterdruck von der Turbineneinrichtung im Saugerkopf erzeugt werden. Mit Hilfe des Unterdrucks können Staubpartikel oder Bohrmehl in das Innere des Staubsaugers eingesaugt werden. Der Sammelbehälter des Staubsaugers weist vorzugsweise einen Saugerschlauch-Einlass auf, durch den die Staubpartikel oder das Bohrmehl eingesaugt werden kann, insbesondere wenn der Einlass mit einem Saugerschlauch verbunden ist und der Staubsauger im Saugbetrieb betrieben wird. Der Saugbetrieb ist vorzugsweise dadurch gekennzeichnet, dass der Staubsauger mit seiner Turbineneinrichtung einen Unterdruck erzeugt. Durch den Saugbetrieb werden Hauptluftströme durch die Kammern des Staubsaugers, die am Saugbetrieb teilnehmen, erzeugt, wobei die Hauptluftströme vorzugsweise von dem Saugerschlauch-Einlass zu der Turbineneinrichtung strömen. Der erste Hauptluftstrom gelangt durch den Saugerschlauch-Einlass in den Sammelbehälter und strömt durch das erste Filterelement in den vorderen Bereich der ersten Kammer. Durch die Membranplatte des ersten Teilungselements strömt der erste Hauptluftstrom in den hinteren Raum der ersten Kammer. Wenn die erste Kammer am Saugbetrieb des Staubsaugers teilnimmt, ist die Einströmöffnung der ersten Kammer von dem Ventil verschlossen (Saugbetriebsstellung des Ventils). Es ist im Sinne der Erfindung bevorzugt, dass die hinteren Räume der Kammern in Strömungsverbindung mit der Turbineneinrichtung des Staubsaugers stehen. Dazu umfassen die Kammern je eine Turbinenöffnung, die von einer Öffnung gebildet wird, die eine Strömungsverbindung zwischen den Kammern und der Turbineneirichtung ermöglicht. Es ist im Sinne der Erfindung bevorzugt, dass diese Turbinenöffnung von demselben Ventil geöffnet oder geschlossen werden kann, das die Einströmöffnung der entsprechenden Kammer öffnet oder schließt. Es ist im Sinne der Erfindung ganz besonders bevorzugt, dass das Ventil so ausgebildet ist, dass es entweder die Einströmöffnung einer Kammer oder die Türbinenöffnung einer Kammer verschließt. Mit anderen Worten ist jeweils entweder die Einströmöffnung oder die Turbinenöffnung des hinteren Raums einer Kammer von dem Ventil verschlossen, während die jeweils andere Öffnung geöffnet ist. Es ist im Sinne der Erfindung bevorzugt, dass das Ventil eine Öffnung umfasst, die durch eine seitliche Verschiebebewegung entweder mit der Einströmöffnung oder der Turbinenöffnung einer Kammer zusammenfallen kann. Die jeweilige Öffnung der Kammer, die mit der Öffnung des Ventils zusammenfällt, liegt dann geöffnet vor, wobei die Einströmöffnung in den Belüftungskanal einmündet, während die Turbinenöffnung in einen kurzen Kanalabschnitt in Richtung Turbineneinrichtung einmündet ("Strömungskanalabschnitt").

Es ist im Sinne der Erfindung bevorzugt, dass die Kammern jeweils eine Einströmöffnung und eine Turbinenöffnung umfassen, wobei die Turbinenöffnungen dazu eingerichtet sind, eine Strömungsverbindung zwischen den Kammern und der Turbineneinrichtung zu ermöglichen. Dabei ist es bevorzugt, dass die Ventile dazu eingerichtet sind, entweder die Einströmöffnung oder die Turbinenöffnung einer Kammer zu verschließen und eine Strömung durch die jeweils andere Öffnung zu ermöglichen.

In einem Ausführungsbeispiel der Erfindung ist es bevorzugt, dass in einer Staubsaugvorrichtung
- eine erste Kammer ein erstes Filterelement und eine erste Einströmöffnung umfasst, wobei die erste Einströmöffnung mit einem ersten Ventil gegenüber einem ersten Belüftungskanal verschließbar ist, wobei die erste Kammer ferner ein erstes Teilungselement umfasst, das eine erste Membranplatte und ein erstes Elastomerventil aufweisen kann; sowie
- eine zweite Kammer ein zweites Filterelement und eine zweite Einströmöffnung umfasst, wobei die zweite Einströmöffnung mit einem zweiten Ventil gegenüber einem zweiten Belüftungskanal verschließbar ist, wobei die zweite Kammer ferner ein zweites Teilungselement umfasst, das eine zweite Membranplatte und ein zweites Elastomerventil aufweisen kann,
- wobei das Teilungselement bzw. seine Membranplatte in einer Parkposition und in einer Abreinigungsposition vorliegen können, wobei ein Umschalten zwischen der Parkposition und der Abreinigungsposition durch einen atmosphärischen Druck erfolgt, der durch ein Öffnen des ersten Ventils oder des zweiten Ventils in der ersten Kammer oder in der zweiten Kammer erzeugbar ist, wobei die Membranplatten bzw. die entsprechenden Teilungselemente dazu eingerichtet sind, beim Einnehmen der Abreinigungsposition einen Rückspül-Impuls auf das jeweilige Filterelement auszuüben, so dass eine Rückspülluftbewegung und eine etwaige zusätzliche mechanische Erschütterung und dadurch eine Abreinigung des jeweiligen Filterelements bewirkt wird.

Es ist im Sinne der Erfindung bevorzugt, dass ein Umschalten zwischen der Parkposition und der Abreinigungsposition der Membranplatte bzw. des Teilungselements von einer Sicke vermittelt wird. Es ist im Sinne der Erfindung bevorzugt, dass die Sicke Bestandteil des Teilungselements ist. Insbesondere verbindet die Sicke die Membranplatte des Teilungselements mit den Seitenwänden der Kammer, wobei das Teilungselement bzw. die Membranplatte durch die unterschiedlichen Stellungen, die die Sicke einnehmen kann, in unterschiedlichen Positionen innerhalb der Kammer angeordnet sein kann. Wenn das Ventil in der Saugbetriebsstellung ist, nimmt das Teilungselement bzw. die Membranplatte vorzugsweise die sogenannte Parkposition ein, in der der Hauptluftstrom zwischen Staubsammelbehälter und Turbine von dem Elastomerventil durchgelassen wird. Wenn das Ventil in der Abreinigungsstellung vorliegt, nimmt das Teilungselement bzw. die Membranplatte vorzugsweise die Abreinigungsposition ein, in der das Teilungselement bzw. die Membranplatte bzw. das Elastomerventil den Hauptluftstrom zwischen Staubsammelbehälter und Turbine blockiert. Die Sicke ist vorzugsweise aus einem elastischen Material gebildet, das mit einer mechanischen Spannung beaufschlagt sein kann. Durch die mechanische Spannung kann es zu einem Knackfrosch-Effekt kommen, der dazu führt, dass es zu einem ruckartigen Umschalten zwischen der Parkposition und der Abreinigungsposition der Sicke kommen kann. Mit anderen Worten ist es im Sinne der Erfindung bevorzugt, dass das Umschalten zwischen der Parkposition und der Abreinigungsposition ruckartig erfolgt. Dadurch wird ein ruckartiger Impuls von dem Teilungselement auf das Filterelement übertragen werden, an das das Teilungselement stoßen kann, wenn es von der Parkposition in die Abreinigungsposition übergeht. Durch diese ruckartige Impulsübertragung von dem Teilungselement auf das Filterelement wird das Filterelement vorteilhafterweise in entgegengesetzter Strömungsrichtung durch das verdrängte Luftvolumen gereinigt und darüber hinaus mechanisch erschüttert, so dass etwaiger anhaftender Filterkuchen bzw. lose im Filter haftende Partikel von dem Filterelement abgeschüttelt werden und aufgrund der Schwerkraft in den Staubsammelbehälter fallen.

Es ist im Sinne der Erfindung bevorzugt, dass ein Spalt zwischen Elastomerventil und Membranplatte dadurch gebildet wird, dass das Elastomerventil an einer Seite an der Membranplatte befestigt vorliegt und an der anderen Seite der Membranplatte in einem Abstand zu der Membranplatt vorliegen kann. Durch diesen Spalt oder Abstand kann der Hauptluftstrom, der im Saugbetrieb zwischen dem Saugschlauch-Einlass und der Turbine strömt, durchgelassen werden.

In einem zweiten Aspekt betrifft die Erfindung ein Verfahren zum Abreinigen einer Filtereinrichtung in einem Staubsauger, wobei das Verfahren durch die folgenden Schritte gekennzeichnet ist:
a) Bereitstellung einer vorgeschlagenen Filtereinrichtung in einem Staubsauger,
b) Betrieb des Staubsaugers, wobei bei Betrieb des Staubsaugers in einem Sammelbehälter des Staubsaugers und in mindestens einer ersten Kammer und/oder in einer zweiten Kammer des Staubsaugers ein Unterdruck herrscht,
c) Erzeugung eines atmosphärischer Druck in einer der Kammern durch Betätigung eines Ventils, wobei durch die Betätigung des Ventils eine Turbinenöffnung der Kammer verschlossen und eine Einströmöffnung der Kammer geöffnet wird und ferner ein Positionswechsel eines Teilungselements innerhalb der Kammer von einer Parkposition in eine Abreinigungsposition bewirkt wird,
d) Abreinigung eines Filterelements durch den Positionswechsel des Teilungselements.

Es ist im Sinne der Erfindung bevorzugt, dass der Positionswechsel des Teilungselements vorzugsweise auch als Stellungswechsel, Positionsänderung oder als Umschalten von einer ersten in eine zweite Position bezeichnet werden kann. Dieser Positionswechsel erfolgt vorzugsweise schlag- oder ruckartig, so dass das Teilungselement bzw. seine Membranplatte mit einem großen Impuls bewegt werden. Vorzugsweise wird dieser Stoß durch das Umschalten einer Sicke vermittelt, mit der die Membranplatte des Teilungselements an den Seitenwänden der Kammer befestigt ist. Die Zustandsänderung der Sicke entspricht vorzugsweise einem schlagartigen Zustandswechsel wie beispielsweise bei einem Knackfrosch, wobei diese schlagartige Zustandsänderung und der dadurch vorteilhafterweise bewirkte Schlag auf das Filterelement zu einer mechanischen Erschütterung führen, die eine Abreinigung des Filterelements bewirkt.

Es ist im Sinne der Erfindung bevorzugt, dass durch eine Betätigung des Ventils das Luftvolumen aus einer der beiden Kammern verdrängt wird, indem die Einströmöffnung freigegeben und die Turbinenöffnung geschlossen wird. Dabei wird insbesondere der Strömungs- oder Öffnungsquerschnitt der Einströmöffnung freigegeben, indem das vorzugsweise als Regelelement oder Schieberventil ausgebildete Ventil von einer Parkposition in eine Abreinigungsposition verschoben wird. Durch diese Druckänderung kann vorteilhafterweise eine Positionsänderung des Teilungselements bewirkt werden, die ergänzend oder zusätzlich zu dem Rückspül-Impuls zu einer mechanischen Erschütterung des Filterelements und zu einer Abreinigung der Filtereinrichtung führt.

Es ist im Sinne der Erfindung bevorzugt, dass die Filterelemente der Filtereinrichtung abwechselnd abgereinigt werden können. Die jeweils andere Kammer stellt dann den Saugbetrieb des Staubsaugers sicher. Vorzugsweise können die Filterabreinigungsvorgänge im Wesentlichen nahtlos, d.h. ohne Pause und Zeitversatz, erfolgen. Es kann allerdings im Sinne der Erfindung auch bevorzugt sein, dass Pausen zwischen den Filterabreinigungsvorgängen der Kammern eingelegt werden. In diesen Pausen ist es bevorzugt, dass beide Kammern am Saugbetrieb des Staubsaugers teilnehmen.

Es ist im Sinne der Erfindung bevorzugt, dass bei Öffnen der Einströmöffnung ein Druckausgleichsstrom in die erste Kammer oder in die zweite Kammer gelangt, wodurch in der entsprechenden Kammer ein atmosphärischer Druck erzeugt wird. Es ist im Sinne der Erfindung darüber hinaus bevorzugt, dass der Druckausgleichsstrom aus einem Belüftungskanal eingesaugt wird, wobei der Belüftungskanal zwischen den Kammern und dem Saugerkopf angeordnet sein kann.

In einer vorteilhaften Ausgestaltung der Erfindung ist es bevorzugt, dass bei Betrieb des Staubsaugers eine Strömungsverbindung zwischen den Kammern und der Turbineneinrichtung besteht, wobei die Strömungsverbindung einen Strömungskanalabschnitt darstellt, der zwischen einer Turbinenöffnung einer der Kammern und der Turbineneinrichtung gebildet wird. Es ist im Sinne der Erfindung bevorzugt, dass der erste Hauptluftstrom und/oder der zweite Hauptluftstrom durch diese Strömungsverbindung strömen kann.

Es stellt einen wesentlichen Vorteil der Erfindung dar, dass die Abreinigung des Filterelements der einen Kammer bei fortgesetztem Saugbetrieb durch die andere Kammer erfolgen kann. Insbesondere betrifft die Erfindung auch einen Staubsauger mit einer erfindungsgemäßen Filtereinrichtung. Die für die vorgeschlagene Filtereinrichtung beschriebenen Definitionen, technischen Wirkungen und Vorteile gelten für das vorgeschlagene Filterabreinigungsverfahren und den Staubsauger, der eine vorgeschlagene Filtereinrichtung aufweist, analog.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: schematische Seitenansicht eines Staubsaugers mit einer bevorzugten Ausführungsform der vorgeschlagenen Filtereinrichtung in vertikaler Anordnung
- Fig. 2: schematische Darstellung des Staubsaugers, während beide Kammern am Saugbetrieb teilnehmen
- Fig. 3: schematische Darstellung des Staubsaugers, während das Filterelement der zweiten Kammer abgereinigt wird
- Fig. 4: schematische Darstellung des Staubsaugers, während das Filterelement der zweiten Kammer abgereinigt wird
- Fig. 5: schematische Darstellung des Staubsaugers am Ende des Abreinigungsvorgangs der zweiten Kammer
- Fig. 6: schematische Darstellung des Staubsaugers, während das Filterelement der ersten Kammer abgereinigt wird
- Fig. 7: schematische Darstellung des Staubsaugers, während das Filterelement der ersten Kammer abgereinigt wird
- Fig. 8: schematische Darstellung des Staubsaugers am Ende des Abreinigungsvorgangs der ersten Kammer
- Fig. 9: mögliche Ausgestaltungen der Sicke
- Fig. 10: schematische Seitenansicht eines Staubsaugers mit einer bevorzugten Ausführungsform der vorgeschlagenen Filtereinrichtung in horizontaler Anordnung

### Ausführungsbeispiele und Figurenbeschreibung:

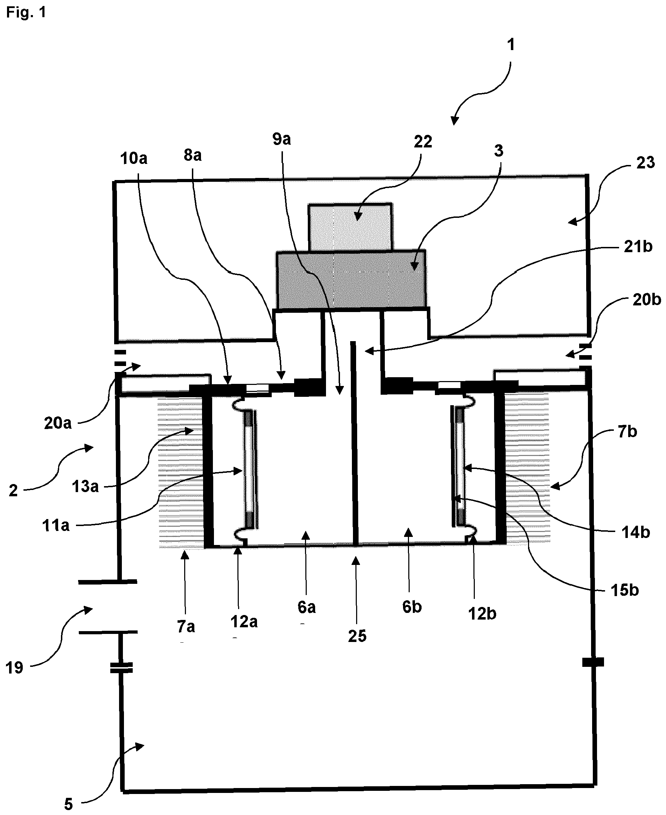

Fig. 1 zeigt eine Seitenansicht eines Staubsaugers 1 mit einer bevorzugten Ausführungsform der vorgeschlagenen Filtereinrichtung 2 in vertikaler Anordnung. In einem unteren Bereich des Staubsaugers 1 ist der Staubsammelbehälter 5 dargestellt, der einen Saugschlauch-Einlass 19 aufweist. An diesen Saugschlauch-Einlass 19 kann ein Saugschlauch angeschlossen werden, der beispielsweise mit einer Bodendüse verbunden sein kann. Durch den Saugschlauch können Staubpartikel oder Bohrmehl eingesaugt werden. Der eingesaugte Staub gelangt dann durch den Saugschlauch-Einlass 19 in den Staubsammelbehälter 5 des Staubsaugers 1.

Der obere Bereich des Staubsaugers 1 wird von einem Staubsauger-Kopf 23 gebildet. In dem Staubsauger-Kopf liegen beispielsweise die Turbine 3 und der Motor 22 vor, mit denen der Unterdruck zum Einsaugen der Staubpartikel und des Bohrmehls erzeugt wird. Zwischen dem Staubsauger-Kopf 23 und dem Staubsammelbehälter 5 sind Belüftungskanäle 20a und 20b vorgesehen, mit denen Luft aus der Umgebung des Staubsaugers 1 durch Öffnungen im Gehäuse eingesaugt werden kann. Diese durch die Belüftungskanäle 20, 20b eingesaugte Luft kann beispielsweise einen Druckausgleichsstrom bilden, wenn in dem Staubsauger 1 ein Druckausgleich stattfinden soll. Dies kann beispielsweise der Fall sein, wenn der Unterdruck innerhalb des Staubsaugers 1 unterbrochen werden soll, um einen Filterabreinigung durchzuführen. Eine Abreinigung der Filterelemente 7a, 7b ist beispielsweise dann vonnöten, wenn die Filterelemente 7a, 7b der vorgeschlagenen Filtereinrichtung 2 mit Staub zugesetzt sind. Der zunächst lose Staub kann zu einem Filterkuchen 24 zusammenbacken, der nur schwer aus den Filterelementen 7a, 7b gelöst werden kann. Um eine wirkungsvolle Filterabreinigung bereitzustellen, bei der insbesondere der Saugbetrieb des Staubsaugers 1 nicht unterbrochen werden muss, wird im Folgenden die Erfindung vorgestellt:
Zwischen dem Staubsammelbehälter 5 und dem Staubsauger-Kopf 23 sind zwei Kammern 6a, 6b vorgesehen, deren Filter 7a, 7b erfindungsgemäß abwechselnd abgereinigt werden können, während in der jeweils anderen Kammer 6a, 6b der Saugbetrieb des Staubsaugers 1 fortgesetzt werden kann. Die Kammern 6a, 6b sind im Wesentlichen gleich ausgebildet, allerdings achsensymmetrisch zu einer die beiden Kammern trennenden Trennwand 25, so dass im Folgenden insbesondere die erste Kammer 6a beschrieben wird. Dabei handelt es sich um die linke Kammer in der Fig. 1. Strömungstechnisch in einem vorderen Bereich der Kammer 6a befindet sich eine Einlassöffnung 13a, durch die der staubbeladene Luftstrom 4a vom Staubsammelbehälter 5 in Richtung der Turbine 3 gesaugt wird. Um die Turbine 3 vor dem Staub zu schützen, ist vor der Einströmungsöffnung 13a ein Filterelement 7a vorgesehen, das dazu eingerichtet ist, einen wesentlichen Anteil des Staubes aus dem Luftstrom 4a herauszufiltern. Nachdem der Luftstrom 4a die Einlassöffnung 13a und das Filterelement 7a passiert hat, gelangt der Luftstrom 4a in einen vorderen Raum 17a der ersten Kammer 6a. Die erste Kammer 6a wird durch ein Teilungselement 11a in den vorderen Bereich 17a und einen hinteren Bereich 18a geteilt. Das Teilungselement 11a ist so ausgestaltet, dass der Luftstrom 4a durch das Teilungselement 11a hindurchströmen kann, so dass es in den hinteren Bereich 18a der ersten Kammer 6a gelangt. Insbesondere umfasst das Teilungselement 11a eine luft- und staubdurchlässige Membranplatte 14a, die mit jeweils einer Sicke 12a an den Seitenwänden der ersten Kammer 6a befestigt vorliegt. Die Sicken 12a können in zwei Zuständen vorliegen, wobei die Sicken 12a während des Saugbetriebs der ersten Kammer 6a vorzugsweise in einer Parkposition vorliegen. Die Parkposition der Sicken 12a bzw. der Membranplatte 14a ist insbesondere dadurch gekennzeichnet, dass die Membranplatte 14a und das Filterelement 7a der ersten Kammer 6a beabstandet zueinander vorliegen, d.h. dass zwischen der Membranplatte 14a und dem Filterelement 7a ein Raum gebildet wird, der im Sinne der Erfindung als vorderer Bereich 17a der ersten Kammer 6a bezeichnet wird.

Neben der Membranplatte 14a umfasst das Teilungselement 11a ein Elastomerventil 15a. Dieses Elastomerventil 15a ist geöffnet, wenn die erste Kammer 6a im Saugbetrieb arbeitet. In diesem Zustand des Elastomerventils 15a kann der Lufttstrom 4a das Teilungselement 11a und das Elastomerventil 15a passieren. Das Hindurchströmen des Luftstroms 4a erfolgt insbesondere durch einen Spalt 16a, der zwischen der Membranplatte 14a und dem Elastomerventil 15a gebildet wird.

Der hintere Raum 18a der ersten Kammer 6a weist zwei mögliche Auslässe auf, von denen jeweils ein Auslass geöffnet und der andere Auslass geschlossen ist. Bewirkt wird dieses Wechselspiel von einem Ventil 10a, das von einer ersten Stellung in eine zweite Stellung gebracht werden kann. Diese Betätigung erfolgt vorzugsweise durch eine Schiebebewegung am Ventil 10a. Mit anderen Worten kann das Ventil 10a von einer ersten Position in eine zweite Position geschoben werden. Die Positionen des Ventils 10a können im Sinne der Erfindung auch als Saugbetriebsstellung bzw. als Filterabreinigungsstellung bezeichnet werden.

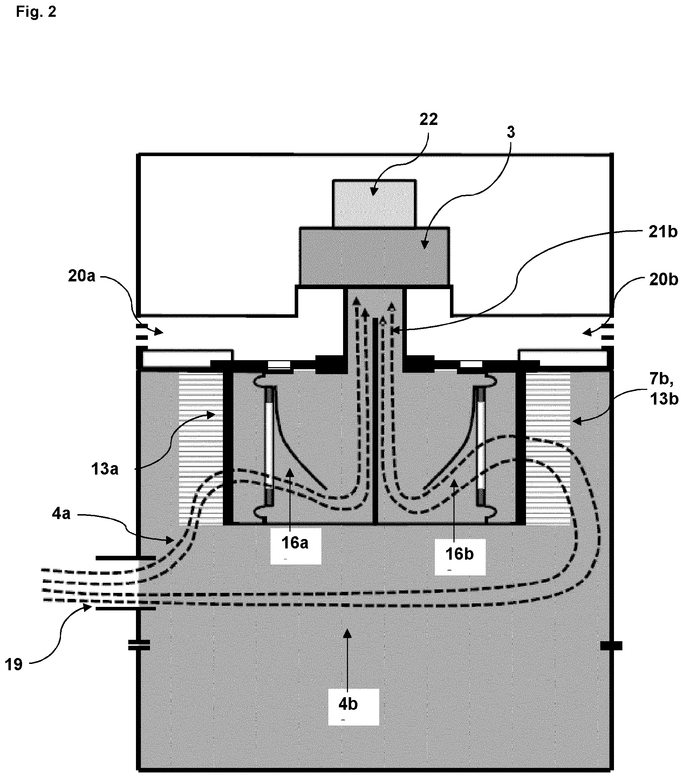

Während des Saugbetriebs der ersten Kammer 6a - wie zum Beispiel abgebildet in den Fig. 2 bis 5 - ist das Ventil 10a so eingestellt, dass eine Turbinenöffnung 9a der ersten Kammer 6a geöffnet ist. Durch die offenstehende Turbinenöffnung 9a besteht eine Strömungsverbindung zwischen der ersten Kammer 6a und der Turbine 3. Dadurch liegt in der ersten Kammer 6a, sowie im gesamten Staubsammelbehälter 5 des Staubsaugers 1 ein Unterdruck vor, so dass Staub durch den Saugschlauch-Einlass 19 in das Innere des Staubsaugers gesaugt werden kann. Insbesondere kann durch die geöffnete Turbinenöffnung 9a der Luftstrom 4a in den Bereich der Turbine 3 gelangen. Dazu kann der Luftstrom 4a durch einen Strömungskanalabschnitt 21a fließen, der zwischen der Turbinenöffnung 9a und der Turbine 3 vorgesehen ist.

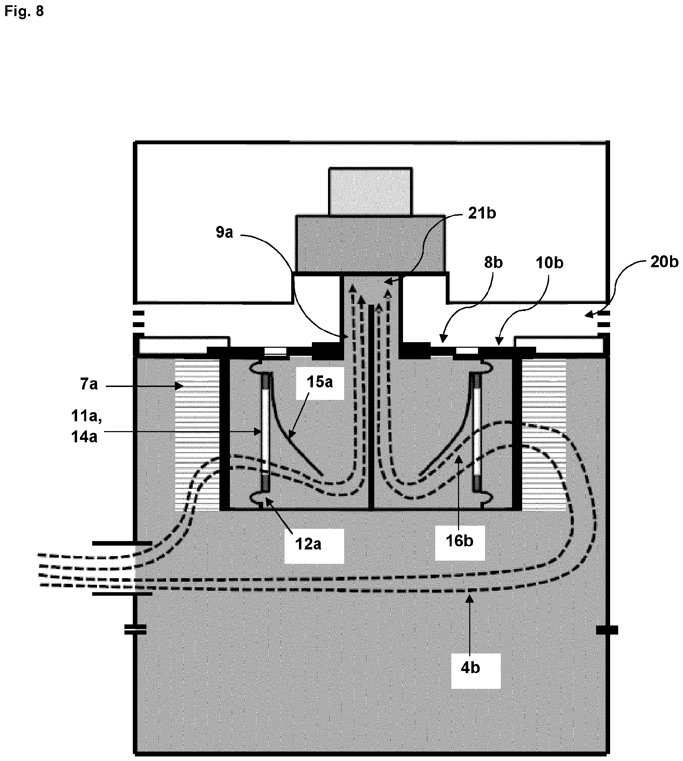

Fig. 2 zeigt eine schematische Darstellung des Staubsaugers 1, während beide Kammern 6a, 6b am Saugbetrieb teilnehmen. Die dunklen Bereiche in den Fig. 2 bis 8 sollen die Bereiche des Staubsaugers 1 darstellen, in denen ein Unterdruck herrscht. In dem in Fig. 2 dargestellten Ausführungsbeispiel der Erfindung stehen beide Ventile 10a, 10b des Staubsaugers 1 in der Saugbetriebsstellung und die Teilungselemente 11a, 11b der beiden Kammern 6a, 6b liegen jeweils in der Parkposition vor, so dass die Luftströme 4a und 4b vom Staubsammelbehälter 5 durch die Filterelemente 7a, 7b in Richtung Turbine 3 strömen können. Dabei passieren sie die Teilungselemente 11a, 11b und die Elastomerventile 15a, 15b, sowie die Turbinenöffnungen 9a, 9b und gelangen so in die Strömungskanalabschnitte 21a, 21b.

Der Saugbetriebsmodus des Staubsaugers 1 ist insbesondere dadurch gekennzeichnet, dass im Staubsammelbehälter 5 und in den Kammern 6a, 6b, die am Saugbetrieb teilnehmen, ein Unterdruck herrscht. Dieser Unterdruck herrscht auch in den Strömungskanalabschnitten 21a, 21b der am Saugbetrieb teilnehmenden Kammern 6a, 6b. Der Unterdruck wird von der Turbine 3 und dem Motor 22 erzeugt und er ist ursächlich für die Ausbildung der Luftströme 4a und 4b, die das Einsaugen von Luft und Staub in den Staubsauger 1 ermöglichen.

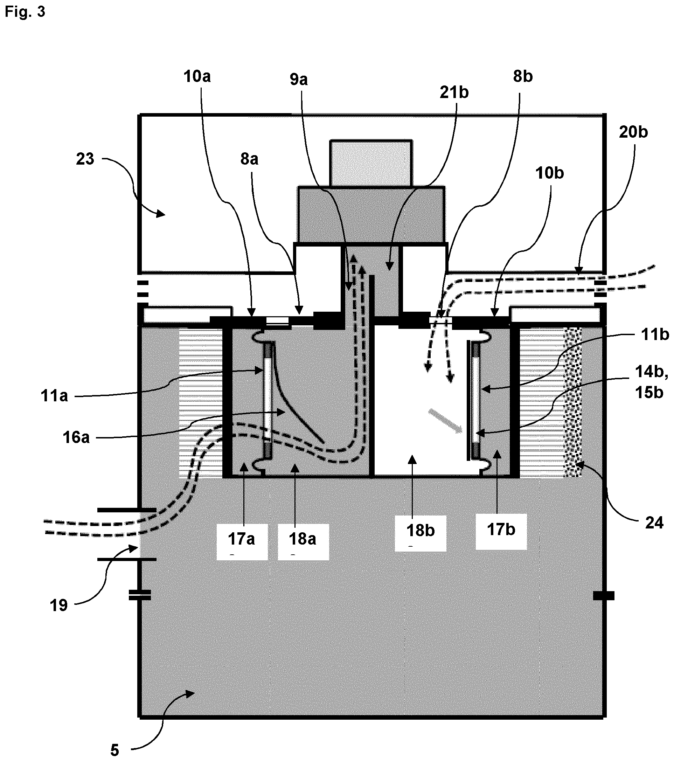

Durch den Saugbetrieb des Staubsaugers 1 können sich die Filterelemente 7a, 7b mit Staub zusetzen, so dass die Filterleistung reduziert wird. Dies kann eine Gefahr für den Motor 22 und die Turbine 3 darstellen, wenn diese Komponenten des Staubsaugers 1 einem Zuviel an Staub ausgesetzt werden. Daher werden die Filterelemente 7a, 7b der vorgeschlagenen Filtereinrichtung 2 regelmäßig abgereinigt, so dass beispielsweise festgebackener Filterkuchen 24 von den Filterelementen 7a, 7b gelöst werden kann. Dazu wird in einer der beiden Kammern 6a, 6b ein Filterabreinigungsvorgang initiiert. Der Start einer Filterabreinigung der zweiten Kammer 6b wird ab Fig. 3 dargestellt.

Im Folgenden wird ein Filterabreinigungsvorgang der zweiten Kammer 6b des Staubsaugers 1 bzw. des Filterelements 7b der zweiten Kammer 6b des Staubsaugers 1 beschrieben. Dieser Filterabreinigigungsvorgang wird durch eine Betätigung des Ventils 10b gestartet, das von der Saugbetriebsstellung in die Filterabreinigungsstellung verschoben wird. Dadurch schließt sich die Turbinenöffnung 9b der zweiten Kammer 6b, während die Einströmöffnung 8b der zweiten Kammer 6b geöffnet wird. Die Einströmöffnung 8b ist leitend mit einem Belüftungskanal 20b verbunden, der wiederum in strömungsleitender Verbindung mit der Umgebung des Staubsaugers 1 steht. Durch diese fluide Verbindung zwischen der Auströmöffnung 8b und der Umgebung des Staubsaugers 1 kann ein Druckausgleichsluftstrom durch die Einströmöffnung 8b in die zweite Kammer 6b gelangen, so dass es zu einer wesentlichen Schwächung des Unterdrucks in der zweiten Kammer 6b kommt. Der Druckausgleichsluftstrom ist in Fig. 3 durch die gestrichelte Luftströmung in der rechten Hälfte der Figur dargestellt. Er verläuft von der Umgebung des Staubsaugers durch den Belüftungskanal 20b der zweiten Kammer 6b in die zweite Kammer 6b. Der Druckausgleichsluftstrom sorgt in der zweiten Kammer 6b dafür, dass sich das Elastomerventil 15b an die Membranplatte 14b anlegt, so dass das Teilungselement 11b dadurch nicht mehr durchlässig für den Luftstrom 4b ist. Die Schließbewegung des Elastomerventils 15b wird in Fig. 3 mit dem Pfeil angedeutet. Mit anderen Worten wird der Luftstrom 4b durch das Schließen des Ventils 10b und das dadurch verursachte Schließen des Elastomerventils 15b blockiert und der Saugstrom 4b durch die zweite Kammer 6b des Staubsaugers 1 wird unterbrochen.

Gleichzeitig werden durch das rasche Eindringen des Druckausgleichsluftstroms in die zweite Kammer 6b die Sicken 12b von ihrer Parkposition in die Abreinigungsposition gebracht. Der Impuls, der von dem Druckausgleichsluftstrom in die zweite Kammer 6b transportiert wird, sorgt für ein schlagartiges Umschalten bzw. Umklappen der Sicken 12b, so dass sich das Teilungselement 11b ebenso schlagartig in Richtung des Filterelements 7b bewegt, es berührt und den Impuls des Druckausgleichsschlags auf das Filterelement 7b überträgt. Dadurch kommt es zu einer massiven, mechanischen Erschütterung des Filterelements 7b, wobei eine Intensität des Stoßes so eingestellt ist, dass ein etwaiger festgebackener Filterkuchen 24 von dem Filterelement 7b gelöst werden kann. Darüber hinaus kann auch loser Staub, der in dem Filterelement 7b sitzt, durch die mechanische Erschütterung abgeschüttelt werden. Wie in Fig. 4 dargestellt, fällt der abgelöste Filterkuchen 24 in den Staubsammelbehälter 5, so dass er später zusammen mit dem übrigen eingesaugten Staub entsorgt werden kann. In den Fig. 3 und 4 ist zu sehen, dass während der Abreinigung des Filterelements 7b in der zweiten Kammer 6b des Staubsaugers 1 der Luftstrom 4b blockiert ist, während der Luftstrom 4a durch die erste Kammer 6a des Staubsaugers 1 weiter fließen kann.

Es kann im Sinne der Erfindung auch vorgesehen sein, dass die Übertragung des Impulses des Druckausgleichsluftstroms zwischen dem Teilungselement 11b und dem Filterelement 7b berührungslos erfolgt. In diesem Fall sind das Teilungselement 11b und das Filterelement 7b so ausgelegt, dass die schlagartige Kompression der Luft im vorderen Bereich 17b der zweiten Kammer 6b ausreicht, um eine ausreichend große mechanische Erschütterung des Filterelements 7b zu bewirken. Die Ausnutzung eines Impulses eines Druckausgleichsluftstoßes zur Bereitstellungen einer effizienten Filterabreinigung bei gleichzeitig fortgesetztem Saugbetrieb eines Staubsaugers kann im Sinne der Erfindung bevorzugt auch als Rückspülung oder als Rückspülprozess bezeichnet werden.

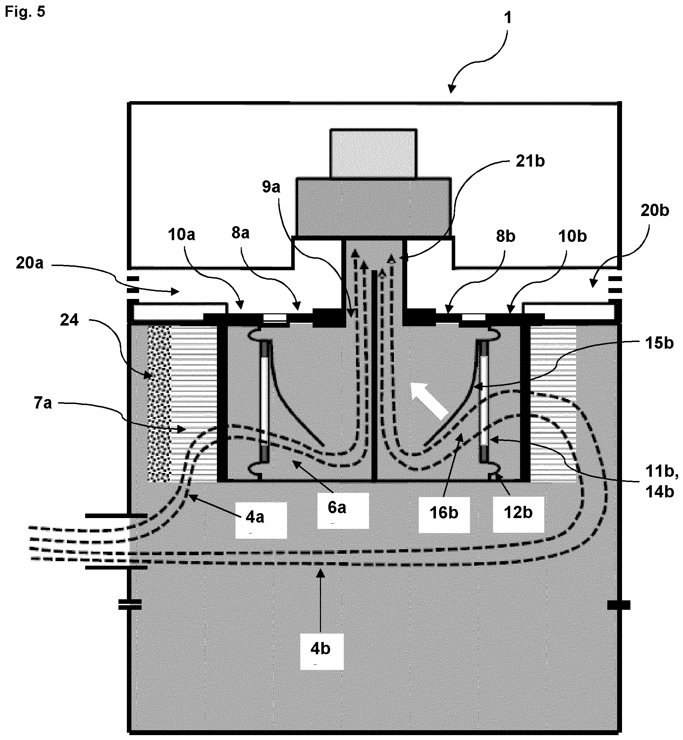

Fig. 5 zeigt eine schematische Darstellung des Staubsaugers 1 am Ende des Abreinigungsvorgangs der zweiten Kammer 6b. Das Ende des Abreinigungsvorgangs wird erneut durch eine Betätigung des Ventils 10b gestartet. Insbesondere wird das Ventil 10b nun von der Abreinigungsstellung in die Saugstellung zurückgeschoben. Dadurch wird die Turbinenöffnung 9b wieder geöffnet, während die Einströmöffnung 8b, die die Strömungsverbindung mit der Umgebung des Staubsaugers 1 ermöglicht, geschlossen wird. Dadurch kann sich in der zweiten Kammer 6b erneut ein Unterdruck aufbauen, wie er für die Durchführung des Saugbetriebs erforderlich ist. Insbesondere strömt erneut ein Saugluftstrom 4b vom Staubsammelbehälter 5 in die zweite Kammer 6b und das Elastomerventil 15b des Teilungselements 11b öffnet sich wieder. Die Öffnungsbewegung des Elastomerventils 15b wird in Fig. 5 durch den weißen Pfeil angedeutet. Darüber hinaus gelangt die Membranplatte 14b aus der Abreinigungsposition wieder in die Parkposition. Dies wird insbesondere durch ein neuerliches Umschalten oder Umklappen der Sicken 12b bewirkt, die ebenfalls von der Abreinigungsposition in die Parkposition des Saugbetriebs zurückspringen. Darüber hinaus wird die Bewegung der Membranplatte 14b aus der Parkposition in die Saugbetriebsposition durch zusätzliche Rückstellkräfte unterstützt, die sich aus der beginnenden Durchströmung des Teilungselements 11b ergeben.

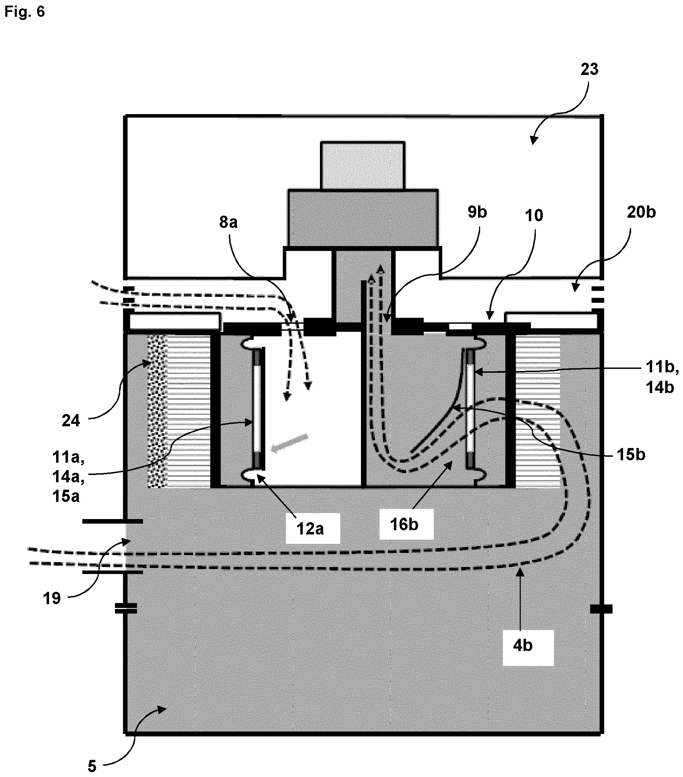

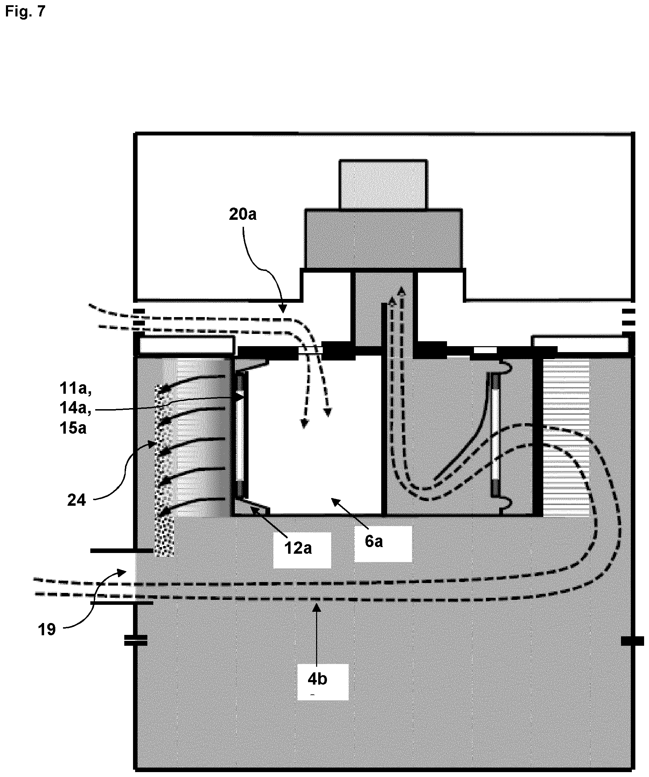

Die Fig. 6 bis 8 zeigen einen Filterabreinigungsvorgang der ersten Kammer 6a der vorgeschlagenen Filtereinrichtung 2. Dabei entsprechen sich jeweils der Inhalt der Figuren 3 und 6, 4 und 7 und 5 und 8, wobei die Bezugszeichen «b» in der Beschreibung durch ein «a» zu ersetzen sind. Auf eine ausführliche Erläuterung der Abbildungen 6 bis 8 wird daher verzichtet. In den Fig. 6 und 7 ist zu sehen, dass während der Abreinigung des Filterelements 7a in der ersten Kammer 6a des Staubsaugers 1 der Luftstrom 4a blockiert ist, während der Luftstrom 4b durch die zweite Kammer 6a des Staubsaugers 1 weiter fließen kann.

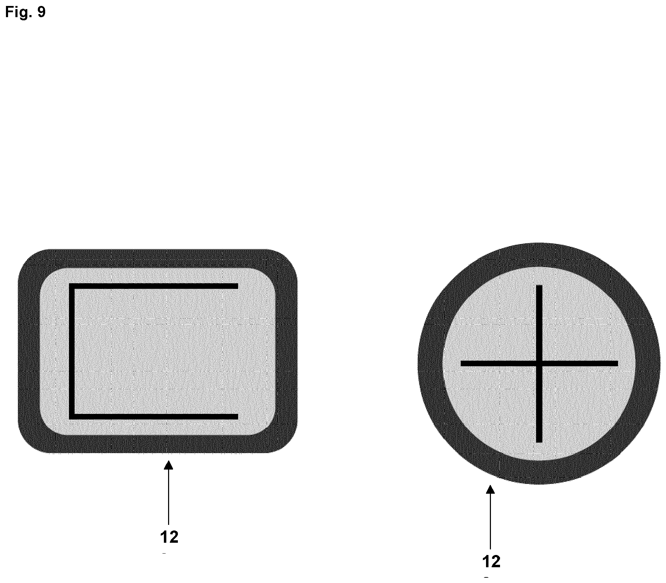

Fig. 9 zeigt mögliche Ausgestaltungen der Sicke 12a, 12b. Der innere Bereich der Sicke 12 wird von einer Elastomersicke gebildet, die vorzugsweise aus einem elastischen Material besteht. Sie weist vorzugsweise eine Einkerbung auf, die beispielsweise die Form eines Kreuzes oder eines offenen Rechtecks haben kann. Die Elastomersicke wird vorzugsweise von der Membranplatte 14 umgeben, die die Sicke 12 mit dem Teilungselement verbindet.

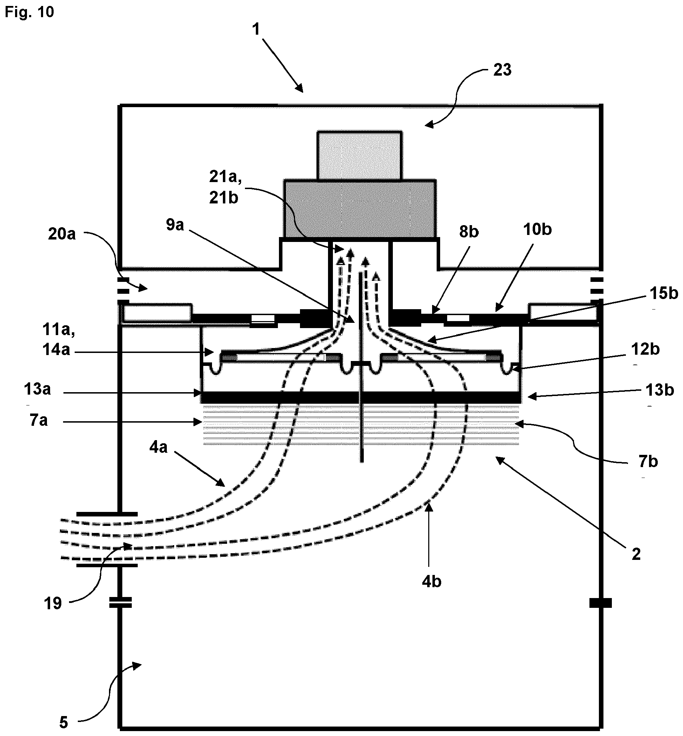

Fig. 10 zeigt eine schematische Seitenansicht eines Staubsaugers 1 mit einer bevorzugten Ausführungsform der vorgeschlagenen Filtereinrichtung 2 in horizontaler Anordnung. Dargestellt ist ein Staubsauger 1 mit einem Staubsauger-Kopf 23 in einem oberen Bereich und einem Staubsammelbehälter 5 in einem unteren Bereich des Staubsaugers 1. In dem Staubsauger-Kopf 23 sind die Turbine 3 und der Motor 22 vorgesehen. Der Staubsammelbehälter 5 weist einen Saugschlauch-Einlass 19 zum Anschluss eines Saugschlauches auf. In dem Staubsammelbehälter 5 sind zwei Kammern 6a, 6b vorgesehen, die in der in Fig. 10 dargestellten Ausgestaltung des Staubsaugers 1 von Luftströmen 4a, 4b durchströmt werden, die von unten nach oben strömen, während die Strömungsrichtung bei dem Staubsauger 1 in Fig .1 (vertikale Anordnung der Kammern 6a, 6b) in seitlicher Richtung von rechts nach links bzw. von links nach rechts erfolgt.

Beim Durchströmen der Kammern 6a, 6b passieren die Luftströme 4a, 4b zunächst die Filterelemente 7a, 7b, bevor sie durch die Einlassöffnungen 13a, 13b in den vorderen Teil 17a, 17b der Kammern 6a, 6b gelangen. Von dort setzen die Luftströme 4a, 4b ihren Weg durch die Teilungselemente 11a, 11b und durch die Elastomerventile 15a, 15b fort, bis sie im Saugbetrieb durch die Turbinenöffnungen 9a, 9b in die der Turbine 3 vorgelagerten Strömungskanalabschnitte 21a, 21b gelangen. Dabei werden die Turbinenöffnungen 9a, 9b im Saugbetriebsfall durch die Ventile 10a, 10b freigegeben.

Im Abreinigungsfall können die Ventile 10a, 10b in die Abreinigungsposition geschoben werden, so dass dann die Turbinenöffnungen 9a, 9b geschlossen und die Auströmöffnungen 8a, 8b geöffnet werden. Die Einströmöffnungen 8a, 8b stehen in fluidischer Verbindung mit Belüftungskanälen 20a, 20b, die mit der Umgebung des Staubsaugers 1 in Strömungsverbindung stehen. Auf diese Weise können durch die Auströmöffnungen 8a, 8b Druckausgleichsströme in die Kammern 6a, 6b gelangen. Diese Druckausgleichsströme schwächen den Unterdruck in der abzureinigenden Kammer ab und schließen die Elastomerventile 15a, 15b der Teilungselemente 11a, 11b und sorgen für eine Bewegung der Teilungselemente 11a, 11b in Richtung der Filterelemente 7a, 7b. Die Impulse der Druckausgleichströme kann dann durch einen Kontakt oder kontaktlos von der Membranplatte 14a, 14b auf die Filterelemente 71, 7b übertragen werden, wodurch eine mechanische Erschütterung der Filterelemente 7a, 7b hervorgerufen wird. Dies führt wiederum zu einer wirkungsvollen Abreinigung der Filterelemente 7a, 7b.

Tests haben gezeigt, dass vor allem eine horizontale Anordnung der vorgeschlagenen Filtereinrichtung 2 zu einem besonders kompakten Staubsauger 1 führen kann, bei dem die Filtereinrichtung 2 nur wenig Bauraum einnimmt.

### Bezugszeichenliste

- 1: Staubsauger
- 2: Filtereinrichtung
- 3: Turbineneinrichtung
- 4: Hauptluftstrom, 4a: erster Hauptluftstrom, 4b: zweiter Hauptluftstrom
- 5: Sammelbehälter
- 6: Kammer, 6a: erste Kammer, 6b: zweite Kammer
- 7: Filterelement, 7a: erstes Filterelement, 7b: zweites Filterelement
- 8: Einströmöffnung, 8a: erste Einströmöffnung, 8b: zweite Einströmöffnung
- 9: Turbinenöffnung, 9a: erste Turbinenöffnung, 9b: zweite Turbinenöffnung
- 10: Ventil, 10a: erstes Ventil, 10b: zweites Ventil
- 11: Teilungselement, 11a: erstes Teilungselement, 11b: zweites Teilungselement
- 12: Sicke, 12a: Sicke in der ersten Kammer, 12b: Sicke in der zweiten Kammer
- 13: Einlassöffnung, 13a: erste Einlassöffnung, 13b: zweite Einlassöffnung
- 14: Membranplatte, 14a: erste Membranplatte, 14b: zweite Membranplatte
- 15: Elastomerventil, 15a: erstes Elastomerventil, 15b: zweites Elastomerventil
- 16: Spalt, 16a: erster Spalt, 16b: zweiter Spalt
- 17: vorderer Raum in einer Kammer (17a: vorderer Raum der ersten Kammer 6a, 17b: vorderer Raum der zweiten Kammer 6b)
- 18: hinterer Raum in einer Kammer (18a: hinterer Raum der ersten Kammer 6a, 18b: hinterer Raum der zweiten Kammer 6b)
- 19: Saugschlauch-Einlass
- 20: Belüftungskanal
- 21: Strömungskanalabschnitt
- 22: Motor
- 23: Staubsauger-Kopf
- 24: Filterkuchen
- 25: Trennwand

## Patentansprüche

1. Filtereinrichtung (2) für einen Staubsauger (1) mit einer Turbineneinrichtung (3) und einem Motor (22) zum Erzeugen eines ersten Hauptluftstroms (4a) und/oder eines zweiten Hauptluftstroms (4b) durch einen Sammelbehälter (5) des Staubsaugers (1) **gekennzeichnet durch**
eine erste Kammer (6a) und eine zweite Kammer (6b) mit je einem Filterelement (7a, 7b), einer Einströmöffnung (8a, 8b) und einer Turbinenöffnung (9a, 9b), wobei ein Ventil (10a und/oder 10b) dazu eingerichtet ist, entweder die Einströmöffnung (8) oder die Turbinenöffnung (9) zu verschließen, wobei in der Kammer (6) ein Unterdruck vorliegt, wenn die Einströmöffnung (8) verschlossen ist und wobei in der Kammer (6) ein atmosphärischer Druck vorliegt, wenn die Einströmöffnung (8) geöffnet ist, wobei die Kammern (6a, 6b) ferner je ein Teilungselement (11a, 11b) umfassen, wobei die Teilungselemente (11a, 11b) in einer Parkposition und in einer Abreinigungsposition vorliegen können,
wobei ein Umschalten zwischen der Parkposition und der Abreinigungsposition durch ein Einlassen des atmosphärischen Drucks erfolgt, das durch eine Betätigung des Ventils (10) bewirkt wird,
wobei die Teilungselemente (11a, 11b) dazu eingerichtet sind, beim Einnehmen der Abreinigungsposition einen Impuls auf das jeweilige Filterelement (7a, 7b) auszuüben, so dass eine Abreinigung des Filterelements (7a, 7b) bewirkt wird.

2. Filtereinrichtung (2) nach Anspruch 1
**dadurch gekennzeichnet, dass**
bei Betrieb des Staubsaugers (1) in dem Sammelbehälter (5) und in mindestens einer der beiden Kammern (6a, 6b) ein Unterdruck herrscht.

3. Filtereinrichtung (2) nach Anspruch 1 oder 2
**dadurch gekennzeichnet, dass**
das Umschalten zwischen der Parkposition und der Abreinigungsposition der Teilungselemente (11a, 11b) von einer Sicke (12) vermittelt wird.

4. Filtereinrichtung (2) nach einem der vorhergehenden Ansprüche
**dadurch gekennzeichnet, dass**
die Turbinenöffnungen (9a, 9b) dazu eingerichtet sind, eine Strömungsverbindung zwischen den Kammern (6a, 6b) und der Turbineneinrichtung (3) zu ermöglichen.

5. Filtereinrichtung (2) nach einem der vorhergehenden Ansprüche
**dadurch gekennzeichnet, dass**
die Kammern (6a, 6b) Einlassöffnungen (13a, 13b) aufweisen und wobei die Filterelemente (7a, 7b) dazu eingerichtet sind, die Einlassöffnungen (13a, 13b) so zu verschließen, dass Staubpartikel aus den Hauptluftströmen (4a, 4b) herausgefiltert werden.

6. Filtereinrichtung (2) nach einem der vorhergehenden Ansprüche
**dadurch gekennzeichnet, dass**
die Teilungselemente (11a, 11b) je eine Membranplatte (14a, 14b) aufweisen.

7. Filtereinrichtung (2) nach Anspruch 6
**dadurch gekennzeichnet, dass**
die Teilungselemente (11a, 11b) ferner Elastomerventile (15a, 15b) aufweisen, wobei die Elastomerventile (15a, 15b) dazu eingerichtet sind, eine Luftströmung durch die Membranplatte (14) dadurch zu verhindern, dass die Elastomerventile (15a, 15b) im Wesentlichen luftdicht an der Membranplatte (14) anliegt, oder wobei die Elastomerventile (15a, 15b) dazu eingerichtet sind, mit der Membranplatte (14a, 14b) einen Spalt (16) zu bilden, durch den eine Luftströmung strömen kann.

8. Filtereinrichtung (2) nach Anspruch 7
**dadurch gekennzeichnet, dass**
der Spalt (16) zwischen Elastomerventil (15) und Membranplatte (14) dadurch gebildet wird, dass das Elastomerventil (15) an einer Seite an der Membranplatte (14) befestigt vorliegt und an der anderen Seite der Membranplatte (14) in einem Abstand zu der Membranplatt (14) vorliegen kann.

9. Filtereinrichtung (2) nach einem der vorhergehenden Ansprüche
**dadurch gekennzeichnet, dass**
ein vorderen Raum (17a, 17b) in einer Kammer (6a, 6b) zwischen dem Filterelement (7a, 7b) und dem Teilungselement (11a, 11b) gebildet wird und ein hinterer Raum (18a, 18b) die Ausströmungsöffnung (8a, 8b) und die Turbinenöffnung (9a, 9b) umfasst.

10. Filtereinrichtung (2) nach einem der vorhergehenden Ansprüche
**dadurch gekennzeichnet, dass**
Belüftungskanäle (20) zwischen dem Sammelbehälter (5) und dem Staubsauger-Kopf (23) vorgesehen sind.

11. Verfahren zum Abreinigen einer Filtereinrichtung (2) in einem Staubsauger (1), wobei das Verfahren durch die folgenden **Schritte gekennzeichnet** ist:
a) Bereitstellung einer Filtereinrichtung (2) nach einem der vorhergehenden Ansprüche in einem Staubsauger (1),
b) Betrieb des Staubsaugers (1), wobei bei Betrieb des Staubsaugers (1) in einem Sammelbehälter (5) des Staubsaugers (1) und in mindestens einer ersten Kammer (6a) oder in einer zweiten Kammer (6b) des Staubsaugers (1) ein Unterdruck herrscht,
c) Erzeugung eines atmosphärischer Druck in einer der Kammern (6a oder 6b) durch Betätigung eines Ventils (10a, 10b), wobei durch die Betätigung des Ventils (10a, 10b) eine Turbinenöffnung (9a oder 9b) der Kammer (6a oder 6b) verschlossen und eine Einströmöffnung (8a oder 8b) der Kammer (6a oder 6b) geöffnet wird und ferner ein Positionswechsel eines Teilungselements (11a oder 11b) innerhalb der Kammer (6a oder 6b) von einer Parkposition in eine Abreinigungsposition bewirkt wird,
d) Abreinigung eines Filterelements (7a oder 7b) durch den Positionswechsel des Teilungselements (11).

12. Verfahren nach Anspruch 11
**dadurch gekennzeichnet, dass**
bei Betrieb des Staubsaugers (1) ein erster Hauptluftstrom (4a) und/oder zweiter Hauptluftstrom (4b) erzeugt wird, der sich zwischen einem Saugschlauch-Einlass (19) und der Turbineneinrichtung (3) ausbildet.

13. Verfahren nach Anspruch 11 oder 12
**dadurch gekennzeichnet, dass**
bei Öffnen der Einströmöffnung (8a, 8b) ein Druckausgleichsstrom aus dem Belüftungskanal (20) in die erste Kammer (11a) oder in die zweite Kammer (11b) gelangt.

14. Verfahren nach einem der Ansprüche 11 bis 13
**dadurch gekennzeichnet, dass**
bei Betrieb des Staubsaugers (1) eine Strömungsverbindung zwischen den Kammern (6a, 6b) und der Turbineneinrichtung (3) besteht, wobei die Strömungsverbindung von einem Strömungskanalabschnitt (21) gebildet wird, der zwischen der Turbinenöffnung (9a oder 9b) und der Turbineneinrichtung (3) angeordnet vorliegt.

15. Verfahren nach einem der Ansprüche 11 bis 14
**dadurch gekennzeichnet, dass**
die Abreinigung des Filterelements (7a oder 7b) einer der beiden Kammern (6a oder 6b) bei fortgesetztem Saugbetrieb durch die andere Kammer (6b oder 6a) erfolgt.
